# FASCICULE DE BREVET EUROPEEN

(11) **EP 3 074 245 B1**
(45) Date de publication et mention de la délivrance du brevet: **04.07.2018**
(21) Numéro de dépôt: 14802667.7
(22) Date de dépôt: 26.11.2014
(51) Int. Cl.: B60C 13/02, B60C 13/00

(54) **PNEUMATIQUE COMPORTANT UN MOTIF DE MASQUAGE DE DEFAUT SUR UN FLANC**
REIFEN MIT EINEM DEFEKTMASKIERENDEN MUSTER AUF EINER SEITENWAND
TYRE COMPRISING A DEFECT-MASKING PATTERN ON A SIDEWALL

(30) Priorité: 29.11.2013 FR 1361868
(43) Date de publication de la demande: 05.10.2016
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR)
(74) Mandataire: Demaure, Pierre-Yves
(86) Numéro de dépôt international: PCT/EP2014/075599
(87) Numéro de publication internationale: WO 2015/078883

(56) Documents cités:
- EP-A1- 2 305 491
- FR-A1- 2 412 426
- US-A- 5 027 876

## Description

### DOMAINE DE L'INVENTION

La présente invention concerne un pneumatique en matériau caoutchoutique pour véhicule automobile comprenant un flanc et un motif formé sur ce flanc.

### ETAT DE LA TECHNIQUE

Un pneumatique comporte de manière connue une carcasse interne, une bande de roulement, un bourrelet d'accrochage à une jante, un flanc, et un élément intérieur d'étanchéité. La carcasse interne est composée d'au moins une nappe carcasse de fils enrobés de caoutchouc. Lors d'une étape de fabrication du pneumatique, cette nappe carcasse est coupée puis assemblées sur un tambour. Cette nappe pouvant faire plusieurs fois le tour de ce tambour, il existe ainsi une pluralité de couches formée à partir d'une même nappe carcasse. Or, il est possible qu'au cours de la mise en place de la nappe, la fin de cette nappe ne coïncide pas exactement avec le début de cette nappe sur le tambour, de sorte qu'il existe un surplus de nappe dans l'assemblage. Cette superposition crée localement une surépaisseur sur l'ébauche crue du pneumatique. Une fois cette ébauche crue vulcanisée et le pneumatique en résultant gonflé, cette surépaisseur apparaît en creux au niveau du flanc du pneumatique. Or ce creux est particulièrement visible sur le pneumatique, notamment sous certaines conditions d'éclairage, ce qui peut constituer un motif de non achat par un consommateur alors même que ce défaut n'est pas préjudiciable à la sécurité. Afin de masquer ce défaut sur le flanc du pneumatique, selon un état de la technique antérieur décrit dans le brevet US6, 439,287, il est proposé de former un motif moiré sur l'ensemble du flanc du pneumatique et notamment dans la région où se trouve la déformation vallonnement/creux créée par le chevauchement des extrémités de ou des nappes carcasses. Plusieurs motifs moirés sont décrits. Ces motifs moirés constituent des motifs d'interférence comportant notamment des stries. Ainsi, ces motifs moirés créent des interférences lorsque la lumière est réfléchie par le flanc du pneumatique. Les différences de réflexion de la lumière qui existaient entre la zone de vallonnement/creux et le reste de la surface du flanc, ne sont ainsi plus visibles à l'oeil nu.

Un problème de cet état de la technique est que le procédé de fabrication de ces motifs moirés est complexe et coûteux à mettre en oeuvre. Un autre problème est que ce motif n'apporte pas une esthétique satisfaisante vis-à-vis du consommateur.

Un autre document EP-A-2305491 décrit un pneumatique en matériau caoutchoutique comprenant un flanc et un motif formé dans ce flanc. Le motif comprend une pluralité d'éléments en creux, chaque élément en creux ayant la forme d'une partie de sphère.

Dans ce contexte, la présente invention vise à masquer ce défaut de déformation flanc d'une manière plus simple, et ceci pour une grande majorité d'angle d'observation d'un consommateur.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales, l'une intérieure, et l'autre extérieure, ladite surface extérieure étant destinée à entrer en contact avec une chaussée lorsque le pneumatique roule.

Par « bourrelet » d'un pneumatique, on entend une partie du pneumatique destinée à prendre assise sur une jante de roue.

Par « flanc » d'un pneumatique, on entend une surface latérale du pneumatique disposée entre la bande de roulement du pneumatique et un bourrelet de ce pneumatique.

Par « motif formé sur un flanc», on entend une partie de flanc présentant des caractéristiques d'état de surface homogène différentes du reste du flanc. Ce motif peut délivrer des informations techniques et légales, et d'autre part permettre aux consommateurs de distinguer l'origine du produit.

### RESUME DE L'INVENTION

A cette fin, l'invention propose un pneumatique en matériau caoutchoutique comprenant un flanc et un motif formé dans ce flanc. Le flanc s'étend selon une surface moyenne S et le motif comprend une pluralité d'éléments en creux, ces éléments en creux ayant la forme d'une partie de sphère. Les éléments en creux se raccordent au niveau de zones de raccordement, ces zones de raccordement s'étendant au-dessus de la surface moyenne S du flanc. Vue en coupe, tout ou partie des éléments en creux comporte une ouverture angulaire inférieure ou égale à 70°.

Les rayons lumineux provenant d'une même source lumineuse qui éclairent le flanc du pneumatique sont ainsi sensiblement déviés de la même manière sur le motif, aussi bien au niveau du motif recouvrant la partie déformée du flanc qu'au niveau du motif recouvrant le flanc où il n'y a pas de déformation.

En outre, les zones de raccordement présentes au-dessus de la surface moyenne S du flanc, constituent des éléments de protection du motif contre des phénomènes de frottements, issus par exemple de râpages trottoirs. L'utilisation de ces zones de raccordement est particulièrement utile pour la protection de grands motifs.

Enfin, l'ouverture angulaire choisie permet d'obtenir une meilleure surface de réflexion pour la lumière. Le motif apparaît ainsi plus clairement sur le flanc du pneumatique.

Dans un mode de réalisation préférentiel, les éléments en creux présentent un rayon R1 et les zones de raccordement sont courbes. Ces zones de raccordement ont un rayon de raccordement R2, tel que R2 ≤ R1/3.

De cette manière, on améliore la résistance mécanique des zones de raccordement.

Selon des modes de réalisation non limitatifs, le pneumatique, peut comporter en outre une ou plusieurs caractéristiques supplémentaires parmi les suivantes :
La densité d'éléments en creux dans le motif est supérieure ou égale à 0,2 éléments en creux par mm². Cela permet de donner au motif un aspect plus uniforme vis-à-vis d'un observateur.

Les éléments en creux sont alignés les uns par rapport aux autres dans le motif. Les limites du motif sont ainsi mieux maîtrisées.

Tout ou partie des éléments en creux comporte une rugosité de surface de paramètre Ra inférieur à 30 µm. Cela permet d'obtenir une surface proche d'une surface polie et ainsi de limiter la dispersion de la lumière.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement un flanc d'un pneumatique, ledit flanc comportant un motif faisant contraste par rapport à ce flanc ;
- la **figure 2** est une représentation en perspective d'une pluralité d'éléments en creux constituant le motif de la **figure 1** ;
- la **figure 3** représente schématiquement une vue en coupe d'une partie des éléments en creux de la **figure 1** ;
- la **figure 4** représente schématiquement une variante de réalisation du motif de la **figure 1****.**

Dans la description qui va suivre, des éléments sensiblement identiques ou similaires seront désignés par des références identiques.

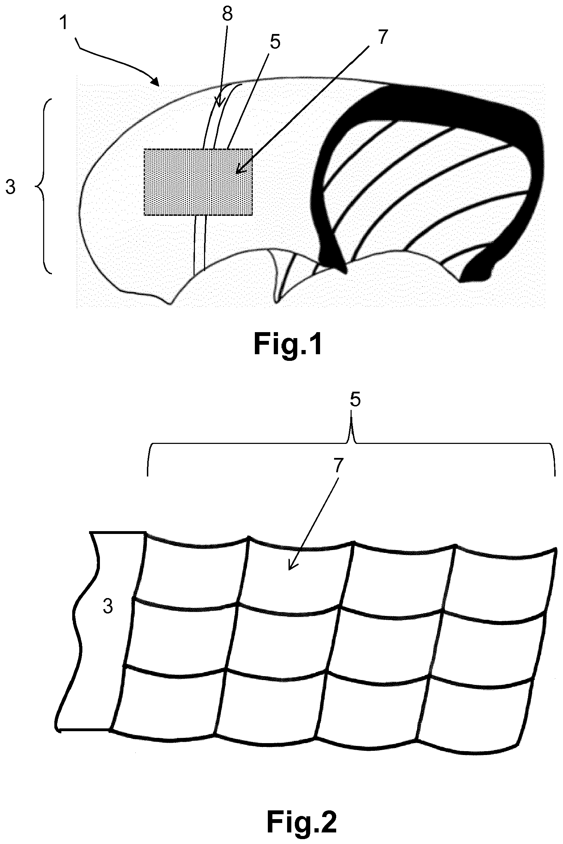

La **figure 1** illustre le flanc 3 d'un pneumatique 1, ledit flanc 3 comprenant un motif 5. Sur la **figure 1** est représenté un échantillon du motif 5 qui recouvre la déformation flanc 8.

Plus particulièrement, le motif 5 comprend une pluralité d'éléments en creux 7 dans le flanc, également appelés éléments concaves. Le motif 5 s'étend sur tout ou partie de la surface du flanc et en particulier sur la partie comprenant la déformation flanc 8 créé par le chevauchement de nappe carcasse du pneumatique 1. Le motif 5 recouvre ainsi tout le vallonnement/creux 8. Lorsque le motif 5 s'étend sur toute la surface circonférentielle du flanc 3, un observateur du pneumatique verra peu de différence visuelle entre le motif 5 et le flanc 3.

La **figure 2** montre une vue agrandie en perspective d'une partie du motif 5 de la **figure 1****.** Comme on peut le voir sur cette figure, les éléments en creux 7 ont la même forme et le motif 5 comporte une répétition de cette même forme. La forme est ici une partie d'une sphère.

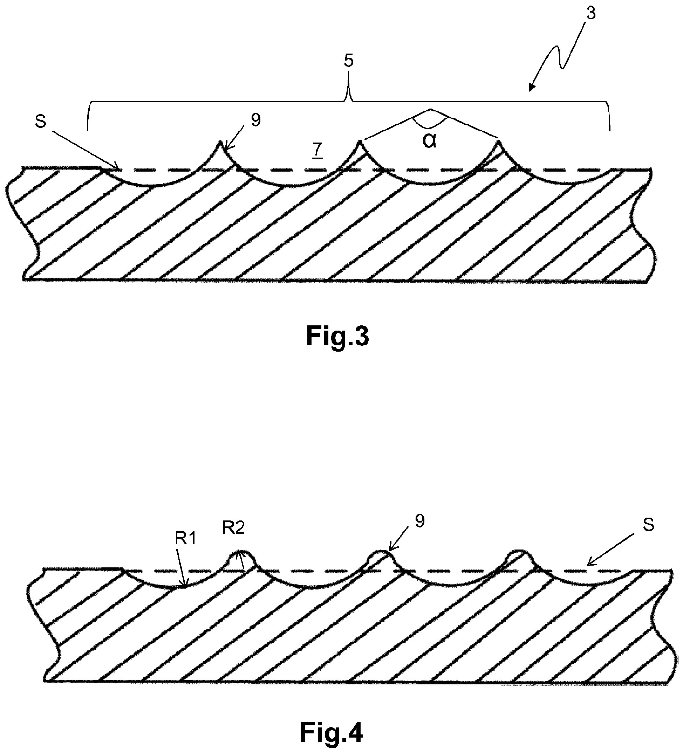

En vue en coupe à la **figure 3****,** les éléments en creux 7 se raccordent au niveau de zones de raccordement 9. Ces zones de raccordement 9 s'étendent au-dessus du flanc. Plus particulièrement, les zones de raccordement 9 s'étendent au-dessus d'une surface moyenne S selon laquelle le flanc s'étend. Chaque élément en creux 7 a la propriété particulière de renvoyer une quantité de lumière qui reste constante, même lorsque le motif est incliné d'un faible angle par rapport à une position d'origine correspondant dans l'exemple à la position sur le flanc sans déformation. Dans un exemple non limitatif, l'inclinaison de l'angle est inférieure à 5°, ce qui correspond à l'inclinaison du renfoncement créé par la déformation flanc par rapport à la surface du flanc sans déformation.

Dans un mode de réalisation non limitatif illustré à la **figure 2****,** les éléments en creux 7 sont alignés les uns par rapport aux autres dans le motif 5. Ceci permet de bien délimiter le motif 5.

Afin d'améliorer davantage le renvoi de lumière par le motif 5, les éléments en creux 7 comportent une ouverture angulaire α inférieure ou égale à 70°. Par ouverture angulaire a, on entend, vue en coupe, l'angle formé par deux segments passant par les zones de raccordement 9 et se rejoignant au centre de l'élément en creux 7.

En outre, afin d'améliorer la réflexion de la lumière, les éléments en creux présentent une texture qui se rapproche d'une surface lisse, réfléchissante, qui ne disperse pas la lumière ni ne réduit l'intensité lumineuse renvoyée. Ainsi, le paramètre écart-moyen arithmétique Ra représentatif de la rugosité de surface est très faible et est inférieur à 30µm. La quantité de lumière renvoyée est maximisée. Quel que soit la position de l'observateur et donc de l'oeil par rapport au pneumatique 1, et quel que soit la source lumineuse qui éclaire le flanc 3 du pneumatique, le motif 5 permet de masquer l'effet visuel créé par le défaut dû au chevauchement de nappe carcasse, à savoir la déformation flanc.

De plus, afin d'obtenir un procédé de fabrication facile à mettre en oeuvre, dans un mode de réalisation non limitatif, la densité d'éléments en creux 7 dans le motif 5 est supérieure ou égale à 0,2 éléments par mm². Les éléments en creux 7 peuvent être ainsi moulés par une partie d'un moule, cette partie de moule ayant préalablement subi une opération de moletage pour le moulage des éléments en creux.

La **figure 4** présente une variante de réalisation dans laquelle les éléments en creux 7 présentent un rayon R1 et les zones de raccordement 9 sont courbes. Ces zones de raccordement 9 présentent un rayon de raccord R2, tel que R2 ≤ R1/3. De cette manière, on améliore globalement la résistance mécanique des zones de raccord 9.

L'invention n'est pas limitée aux exemples décrits et représentés et diverses modifications peuvent y être apportées sans sortir de son cadre.

Ainsi, dans un mode de réalisation non limitatif, les éléments en creux sont moulés par une partie d'un moule, ladite partie de moule ayant préalablement subi une opération de moletage pour le moulage des éléments en creux.

## Revendications

1. Pneumatique en matériau caoutchoutique comprenant un flanc (3) et un motif (5) formé dans ce flanc (3), ledit flanc s'étendant selon une surface moyenne S, ledit motif (5) comprenant une pluralité d'éléments en creux (7), chaque élément en creux (7) ayant la forme d'une partie de sphère, les éléments en creux (7) se raccordant au niveau de zones de raccordement (9) **caractérisé en ce que** ces zones de raccordement (9) s'étendent au-dessus de la surface moyenne S du flanc et **en ce que,** vue en coupe, tout ou partie des éléments en creux (7) comporte une ouverture angulaire (α) inférieure ou égale à 70°, ladite ouverture angulaire (α) correspondant à l'angle formé par deux segments passant par les zones de raccordement 9 et se rejoignant au centre de l'élément en creux 7.

2. Pneumatique selon la revendication 1, les éléments en creux présentant un rayon R1, **caractérisé en ce que** les zones de raccordement (9) sont courbes et présentent un rayon de raccordement R2, tel que R2 ≤ R1/3.

3. Pneumatique selon l'un des revendications 1 à 2, **caractérisé en ce que** la densité d'éléments en creux (7) dans le motif (5) est supérieure ou égale à 0,2 éléments en creux par mm².

4. Pneumatique selon l'une quelconque des revendications 1 à 3, **caractérisé en ce que** les éléments en creux (7) sont alignés les uns par rapport aux autres dans le motif (5).

5. Pneumatique selon l'une quelconque des revendications 1 à 4, **caractérisé en ce que** tout ou partie des éléments en creux (7) comporte une rugosité de surface de paramètre Ra inférieur à 30 µm.

## Patentansprüche

1. Reifen aus kautschukartigem Material, aufweisend eine Flanke (3) und ein in dieser Flanke (3) ausgebildetes Muster (5), wobei die Flanke sich entlang einer mittleren Oberfläche S erstreckt, wobei das Muster (5) eine Vielzahl von vertieften Elementen (7) aufweist, wobei jedes vertiefte Element (7) die Form eines Kugelabschnitts aufweist, wobei die vertieften Elementen (7) sich im Bereich von Verbindungszonen (9) verbinden, **dadurch gekennzeichnet, dass** diese Verbindungszonen (9) sich über die mittlere Oberfläche S der Flanke erstrecken und dass in der Querschnittansicht alle oder ein Teil der vertieften Elemente (7) eine Winkelöffnung (α) umfasst, welche kleiner oder gleich 70° ist, wobei die Winkelöffnung (α) dem Winkel entspricht, welcher durch zwei Segmente gebildet wird, welche die Verbindungszonen 9 durchlaufen und sich in der Mitte des vertieften Elements 7 treffen.

2. Reifen nach Anspruch 1, wobei die vertieften Elemente einen Radius R1 aufweisen, **dadurch gekennzeichnet, dass** die Verbindungszonen (9) Kurven sind und einen Verbindungsradius R2 aufweisen, wie beispielsweise R2 ≤ R1/3.

3. Reifen nach einem der Ansprüche 1 bis 2, **dadurch gekennzeichnet, dass** die Dichte an vertieften Elementen (7) in dem Muster (5) größer oder gleich 0,2 vertiefte Elemente pro mm² ist.

4. Reifen nach einem der Ansprüche 1 bis 3, **dadurch gekennzeichnet, dass** die vertieften Elemente (7) in Bezug zueinander in dem Muster (5) ausgerichtet sind.

5. Reifen nach einem der Ansprüche 1 bis 4, **dadurch gekennzeichnet, dass** alle oder ein Teil der vertieften Elemente (7) einen Oberflächenrauheitskennwert Ra von kleiner als 30 µm umfasst.

## Claims

1. Tyre made of rubbery material comprising a sidewall (3) and a pattern (5) formed in this sidewall (3), the said sidewall extending along a mean surface S, the said pattern (5) comprising a plurality of recessed elements (7), each recessed element (7) having the form of a part of a sphere, the recessed elements (7) meeting at connection zones (9), **characterized in that** these connection zones (9) extend above the mean surface S of the sidewall and **in that**, viewed in cross section, all or part of the recessed elements (7) subtend an angle (α) less than or equal to 70°, the said angle (α) corresponding to the angle formed by two segments passing through the connection zones 9 and meeting at the centre of the recessed element 7.

2. Tyre according to Claim 1, the recessed elements having a radius R1, **characterized in that** the connection zones (9) are curved and have a blend radius R2 such that R2 ≤ R1/3.

3. Tyre according to either of Claims 1 and 2, **characterized in that** the density of recessed elements (7) within the pattern (5) is greater than or equal to 0.2 recessed elements per mm².

4. Tyre according to any one of Claims 1 to 3, **characterized in that** the recessed elements (7) are aligned with one another within the pattern (5).

5. Tyre according to any one of Claims 1 to 4, **characterized in that** all or part of the recessed elements (7) have a surface roughness parameter Ra less than 30 µm.
